(19) Europäisches Patentamt
European Patent Office
Office européen des brevets

(11) Veröffentlichungsnummer: **0 326 931**
**A2**

# (12) EUROPÄISCHE PATENTANMELDUNG

(21) Anmeldenummer: 89101306.2

(22) Anmeldetag: 26.01.89

(51) Int. Cl.4: C08K 5/16 , C08L 79/08 , C08G 73/06

(30) Priorität: 02.02.88 DE 3802979

(43) Veröffentlichungstag der Anmeldung: 09.08.89 Patentblatt 89/32

(84) Benannte Vertragsstaaten: CH DE ES FR GB IT LI NL

(71) Anmelder: BASF Aktiengesellschaft
Carl-Bosch-Strasse 38
D-6700 Ludwigshafen(DE)

(72) Erfinder: Gerth, Dale, Dr.
Lisztstrasse 144
D-6700 Ludwigshafen(DE)
Erfinder: Ittemann, Peter, Dr.
231 Manor House Mill Bailiwyck
Fort Mill S.C. 29715(US)
Erfinder: Tesch, Helmut, Dr.
Goethestrasse 12
D-6701 Birkenheide(DE)

## (54) Wärmehärtbare Harzmischung.

(57) Die Erfindung betrifft eine wärmehärtbare Harzmischung aus

A) einem polyfunktionellen, aromatischen Cyansäureester,
B) einem monofunktionellen, aromatischen Cyansäureester,
C) einem thermoplastischen Polymeren,
D) gegebenenfalls einem Bismaleinimid,
E) gegebenenfalls einem Epoxidharz.

EP 0 326 931 A2

## Wärmehärtbare Harzmischung

Die Erfindung betrifft eine wärmehärtbare Harzmischung auf Basis von Cyansäureestern und thermoplastischen Polymeren, die nach der Härtung Formkörper mit guter Zähigkeit, Steifigkeit und Wärmebeständigkeit ergeben.

Cyansäureesterharze weisen gute Verarbeitungs- und Härtungseigenschaften auf, beim Aushärten ergeben sie Formkörper mit guter mechanischer Festigkeit, Chemikalienbeständigkeit und hohen Glasübergangstemperaturen, jedoch verhältnismäßig großer Sprödigkeit. Ähnliches gilt auch für Epoxidharze. Bei diesen ist es bekannt, daß die Zähigkeit durch Zusatz von kautschukartigen oder thermoplastischen Polymeren verbessert werden kann. Solche Zusätze wurden auch schon bei Cyanatharzen vorgeschlagen.

In JP-A 57/165 451 sind Mischungen aus einem Cyansäureester und einem hydroxylgruppenhaltigen Polyethersulfon beschrieben. EP-A 230 631 betrifft Mischungen aus einem polyfunktionellen Cyansäureester, einem polyfunktionellen Maleinimid, einer Epoxyverbindung und einem Polyester. JP-A 275 123/62 beschreibt Mischungen aus Cyanatestern, Epoxidharzen und einem Polyethersulfon. Nach US-A 4 157 360 und einer Veröffentlichung von D.H. Wertz und D.C. Prevorsek in Polymer Engineering and Science Vol. 25, No. 13 (1985), Seiten 804 - 806 werden beim Aushärten von Mischungen aus Cyansäureestern und Thermoplasten semi-interpenetrating Polymer-Netzwerke gebildet. Es hat sich gezeigt, daß ein derartiger Zusatz von Thermoplasten zwar die Zähigkeit der Formkörper aus Cyansäureesterharze erhöht, daß dabei aber die Steifigkeit, gemessen durch den Elastizitätsmodul, und in vielen Fällen auch die Wärmebeständigkeit abnimmmt.

In dem NASA-Report 3615 "Development of Tough, Moisture Resistant Laminating Resins" von R.A. Brand und E.S. Harrison, 1982, ist die Verbesserung der Zähigkeit und Wasserbeständigkeit von Cyanatharzen durch Zusatz von Monocyanaten beschrieben. Eine weitere Verbesserung der Zähigkeit kann durch Zumischen eines Amin-terminierten Butadien/Acrylnitril-Kautschuks erzielt werden. Dies geht aber auf Kosten der Steifigkeit. Es hat sich außerdem gezeigt, daß mit diesem System in Hochleistungsverbundwerkstoffen keine ausreichende Verbesserung der Festigkeit nach Schlagbeanspruchung (CAI-Wert) erreicht wird.

Der Erfindung lag also die Aufgabe zugrunde, Cyansäureesterharze zu entwickeln, die beim Aushärten Formkörper mit verbesserter Zähigkeit ergeben, ohne daß aber die Steifigkeit und Wärmebeständigkeit verringert wird. Faserverbundwerkstoffe auf Basis dieser Cyanatharze sollten eine hohe Festigkeit nach Schlagbeanspruchung aufweisen.

Es wurde gefunden, daß diese Aufgaben gelöst werden, wenn man zu Mischungen aus polyfunktionellen Cyansäureestern und thermoplastischen Polymeren monofunktionelle Cyansäureester zusetzt.

Gegenstand der Erfindung sind demzufolge wärmehärtbare Harz-Mischungen, enthaltend

A) 100 Gew.teile eines polyfunktionellen, aromatischen Cyansäureesters,

B) 2 bis 100 Gew.teile eines monofunktionellen aromatischen Cyansäureesters,

C) 5 bis 100 Gew.teile eines thermoplastischen Polymeren mit einer Glastemperatur oberhalb von 100 °C.

D) ggf. 0 bis 50 Gew.teile eines Bismaleinimids,

E) ggf. 0 bis 50 Gew.teile eines Epoxidharzes.

Polyfunktionelle aromatische Cyansäureester sind bekannt. Ihre Cyclotrimerisierung und die Eigenschaften der ausgehärteten Polymeren sind z.B. von R. Kubenz et al in Kunststoffe, Band 58 (1968), Seiten 827 - 832 beschrieben. Sie entsprechen der allgemeinen Formel

$R(O\text{-}C{\equiv}N)_n$ (I),

worin n eine ganze Zahl von größer oder gleich 2 ist und R ein n-wertiger aromatischer Rest mit vorzugsweise 6 bis 36 Kohlenstoffatomen bedeutet, wobei die Kohlenstoffkette gegebenenfalls durch Brückenglieder unterbrochen sein kann. Solche Brückenglieder sind z.B.

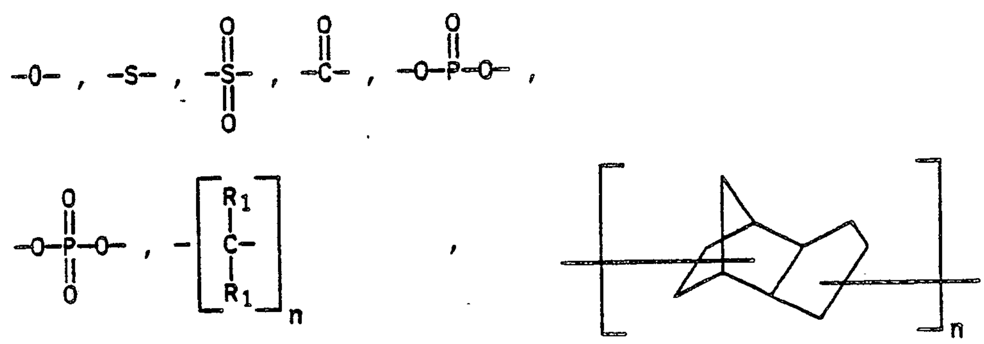

Folgende polyfunktionelle aromatische Cyansäureester seien beispielhaft genannt:

1,4-Dicyanatobenzol, 1,3-Dicyanatobenzol, Dicyantobisphenol A, Dicyanatobisphenol F, 4,4′-Dicyanatobiphenyl, 4,4′-Dicyanatodiphenylether, 4,4′-Dicyanatodiphenylketon, 4,4′-Dicyanatodiphenylsulfon,

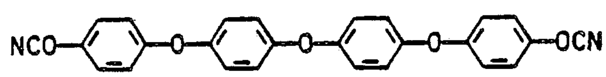

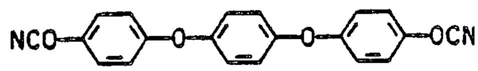

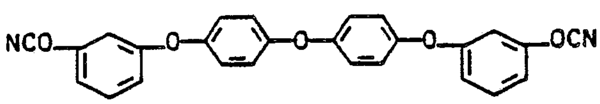

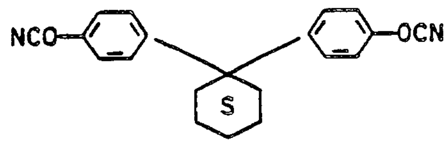

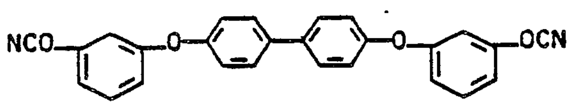

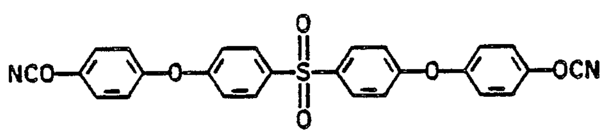

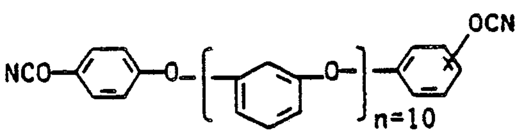

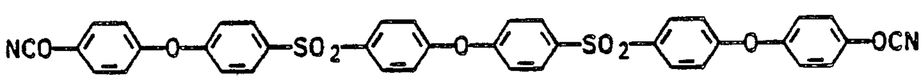

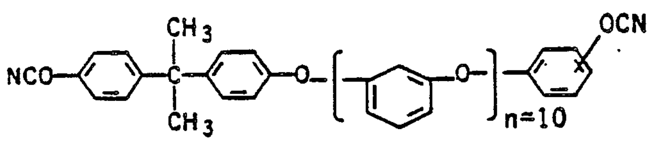

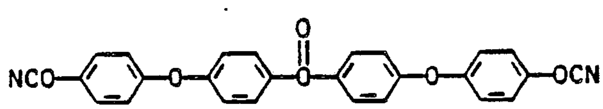

Monofunktionelle aromatische Cyansäureester sind ebenfalls bekannt. Sie entsprechen der Formel
$R'-O-C \equiv N$ ,
worin R′ ein einwertiger aromatischer Rest mit vorzugsweise 6 bis 12 Kohlenstoffatomen bedeutet, der gegebenenfalls substituiert sein kann, z.B. durch Halogenatome, Alkyl- oder Hydroxylgruppen. Auch beim Rest R′ kann die Kohlenstoffkette wieder durch die oben genannten Brückenglieder unterbrochen sein. Die

Monocyanate B sind in der Harzmischung in Mengen von 2 bis 100, vorzugsweise von 5 bis 50 Gew.-Teilen, bezogen auf 100 Gew.-Teile A, enthalten.

Die folgenden monofunktionellen aromatischen Cyansäureester sind als Beispiele genannt: 4-Cyanatobiphenyl, Cyanatobenzol, 1-Cyanatonaphthalin, 2-Cyanatonaphthalin, 4-Cyanatononylphenol, 4-Chlor-cyanatobenzol, 4-Cyanatodiphenylsulfon, 4-Cyanatotoluol,. 4-Cyanatodiphenylether und 4-Cyanatodiphenylketon.

Geeignete temperaturbeständige thermoplastische Polymere C sind z.B. Polyimide, Polyetherketone, Polyetheretherketone, Polysulfone, Polyethersulfone, Polycarbonate, Polyarylate und Polyetherimide. Ihr Molekulargewicht kann zwischen 2 000 und 200 000 liegen. Bevorzugt sind Thermoplaste mit einem mittleren Molekulargewicht $M_n$ von 3 000 bis 30 000, insbesondere von 5 000 bis 20 000, die reaktive Endgruppen, z.B. phenolische Hydroxyl-, Amino-, Carboxyl- oder Isocyanato-Gruppen, enthalten. Diese reaktiven Endgruppen reagieren mit den Cyanatgruppen der Komponenten A und B und stellen dadurch eine Bindung von Thermoplast zur Harz-Matrix her.

Die Thermoplasten C sind in der Harzmischung in Mengen von 5 bis 100, vorzugsweise von 10 bis 50 Gew.-Teilen, bezogen auf 100 Gew.-Teile A, enthalten.

Besonders bevorzugte Thermoplaste sind hydroxylterminierte Polysulfone und Polyethersulfone. Die Herstellung dieser Oligomeren aus bifunktionellen Phenolen und Dichlordiphenylsulfon ist z.B. in Polymer-Preprint, 23, Seite 284 (1982) beschrieben. Die folgenden bifunktionellen Phenole seien als Beispiele genannt: Bisphenol A, Bisphenol F, 4,4′-Dihydroxydiphenylsulfon, 1,6-Dihydroxynaphthalin, 2,7-Dihydroxynaphthalin, und 4,4′-Dihydroxybiphenyl.

Es können auch Mischungen der temperaturbeständigen Thermoplasten C mit anderen Thermoplasten, z.B. Polyestern, eingesetzt werden.

Die Bismaleinimide D entsprechen der Formel

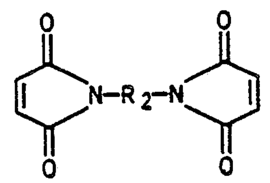

(III)

worin $R_2$ ein aromatischer oder aliphatischer Rest bedeutet. Bismaleinimide werden nach bekannter Methode aus Maleinsäureanhydrid und Diaminen hergestellt. Bevorzugt sind aromatische Diamine, aber wenn eine gewisse Flexibilität verlangt wird, können auch aliphatische Diamine, allein oder in Verbindung mit aromatischen Diaminen, verwendet werden. Die folgende Diamine seien beispielhaft genannt: m-Phenylendiamin, p-Phenylendiamin, 4,4′-Diaminodiphenylsulfon, 3,3′-Diaminodiphenylsulfon, 4,4′-Diaminodiphenylmethan, 4,4′-Diaminodiphenylether, usw. Durch die Bismaleinimide werden Temperaturbeständigkeit und Lösungsmittelbeständigkeit der gehärteten Formkörper verbessert.

Gegebenenfalls kann auch ein Vorpolymerisat aus dem polyfunktionellen Cyansäureester A und den Bismaleinimid D eingesetzt werden.

Als Epoxidharze E können bekannte Polyglycidether von Diphenylolkanen und mehrwertigen Phenolen, wie Novolaken, Kresolen und Resolen eingesetzt werden. Bevorzugt sind Diglycidylether von Bisphenol A und Bisphenol F. Der Zusatz von Epoxidharzen verbessert die Lösungsmittelbeständigkeit.

Die Harzmischung kann in Gegenwart von 0 bis 3 Gew.% eines trimerisierungsfördernden Katalysators ausgehärtet werden. Dabei können Säuren, Basen, Salzen, Phenole, und Phosphorverbindungen eingesetzt werden, wie beispielsweise Lewis-Säuren ($AlCl_3$, $BF_3$, $FeCl_3$, $TiCl_4$), Protonsäuren ($HCl$, $H_3PO_4$), Natriumhydroxid, Triethylamin, Tributylphosphin, usw.

Bevorzugt sind Übergangsmetall-enthaltende Katalysatoren, wie z.B. Kobalt-Naphthenat, Kupfer-Naphthenat, Zink-Octoat, Kobalt-Acetylacetonat, Zink-Acetylacetonat, gegebenenfalls in Gegenwart eines Protonendonors wie Nonylphenol.

Das Harz kann in Lösung gemischt werden. Dabei werden die Komponenten in einem Lösungsmittel, wie z.B. Methylenchlorid oder Aceton, gelöst. Das Lösungsmittel wird unter Vakuum entfernt und die entstehende Mischung wird bei 100 - 180° C geschmolzen. Diese Mischung wird entweder bei 80 - 140° C mit Katalysator versetzt, oder zu einer gewissen Viskosität durch Erhitzen auf 100 - 200° C vorreagiert und dann das entstehende Präpolymer mit Katalysator versetzt. Bevorzugt ist aber, die Komponente in der Schmelze zu vermischen und dann, ggf. nach Vorreaktion, mit dem Trimerisierungskatalysator zu versetzen. Dabei ist vorteilhaft, daß durch den Zusatz des Monocyanats die Viskosität der Harzmischung herabgesetzt wird.

Die Harzmischung wird bei 120 bis 200° C 30 bis 720 Minuten lang gehärtet und ggf. bei 200 bis

250 °C 30 bis 720 Minuten nachgehärtet.

Die erfindungsgemäßen Harze sind als Imprägnier-, Gieß- und Laminierharze, sowie als Formmassen (gefüllt oder ungefüllt) einsetzbar.

Dienen sie zu Herstellung von Hochleistungsverbundwerkstoffen, so erfolgt die Tränkung von Glas-, Kohlenstoff- oder Aramidfasern unter Bildung von unidirektionalen Prepregs, Gewebeprepregs oder Rovings bevorzugt aus der Schmelze bei 50 - 150 °C. Bei 100 °C sollte die Harzmischung dabei zweckmäßigerweise eine Viskosität zwischen 1 500 und 10 000, vorzugsweise zwischen 2 000 und 5 000 mPas aufweisen.

Eine weitere Erhöhung der Zähigkeit von Hochleistungsverbundwerkstoffen kann erreicht werden, wenn man zwischen die Prepregschichten Partikel von hochtemperaturbeständigen Thermoplasten einlagert.

Hochleistungsverbundwerkstoffe aus den erfindungsgemäßen Harzmischungen können in Luft- und Raumfahrt, sowohl für ausgewählte Automobilteile eingesetzt werden. Aufgrund ihrer hohen Zähigkeit, Steifigkeit und Glasübergangstemperaturen sind sie für den Flugzeugbau besonders gut geeignet. Diese Eigenschaften in Verbindung mit ihrer niedrigen Dielektrizitäts-Konstante erlauben ihre Verwendung für elektronische Komponenten, wie z.B. Leiterplatten.

Die in den Beispielen angegebenen Eigenschaften der ausgehärteten Formkörper wurden folgendermaßen gemessen:

Glastemperatur Tg:

nach DIN 53445

Elastizitätsmodul E:

bestimmt nach der von Saxena und Hudak in International Journal of Fracture, Vol. 14, No. 5, p. 453-467 angegebenen Beziehung zwischen Rißöffnung und E-Modul

Bruchenergie $G_{Ic}$:

bestimmt nach der Beziehung $G_{Ic} = K_{Ic}^2 / E$ wobei der Spannungsintensitätsfaktor $K_{Ic}$ nach ASTM Metal Standard E 399 ermittelt wurde.

Druckfestigkeit nach Schlagbeanspruchung CAI:

bestimmt nach Boeing-Test BSS 7260 an 32 lagigen, quasiisotropen $[-45^\circ, 0^\circ, -45^\circ, 90^\circ]_{4s}$-Laminaten nach einer Schlagebeanspruchung von 6,7 Joule/mm.

Beispiel 1

Dicyanatobisphenol A (350 g) und 4-Cyanatobiphenyl (50 g) werden auf 110 °C erhitzt. 100 g eines Polysulfons mit einem mittleren Molekulargewicht $\overline{M}_n$ von 12000, hergestellt aus 4,4′-Dichlordiphenylsulfon und Bisphenol A, wird langsam zugegeben. Die Mischung wird entgast und gerührt bei 120 °C bis das Polysulfon sich gelöst hat. Das Harz wird auf 100 °C abgekühlt und eine Katalysatormischung aus 0,93 g Nonylphenol und 0,31 g Kupfernaphthenat wird zugegeben. Die Mischung wird 10 min gerührt und das Harz wird in eine 4 mm x 25 cm x 25 cm Metallform gegossen. Das Harz wird 2 h bei 120 °C, 2 h bei 180 °C und 4 h bei 210 °C ausgehärtet. Testproben wurden geprüft. Die Ergebnisse sind in der Tabelle dargestellt.

Beispiel 2

Beispiel 1 wird wiederholt mit 300 g Dicyanatobisphenol A, 100 g 4-Cyanatobiphenyl und 100 g des hydroxyterminierten Polysulfons vom Beispiel 1.

Beispiel 3 (Vergleichsversuch)

Dicyanatobisphenol A (320 g) wird auf 110 °C erwärmt und das hydroxyterminierte Polysulfon (80 g) von Beispiel 1 zugegeben. Die Mischung wird gerührt bis das Polysulfon sich löst. Die Mischung wird auf 100 °C abgekühlt und 0,8 g von einer Katalysatormischung von 0,5 g Kupfer Naphthenat und 1,5 g Nonylphenol, wird zugegeben. Das Harz wird 5 min. unter Vakuum gerüht und dann in eine 4 mm x 25 cm x 25 cm Metallform gegossen. Das Harz wird 2 h bei 120 °C, 2 h bei 180 °C und 4 h bei 210 °C ausgehärtet. Test-Ergebnisse sind in der Tabelle dargestellt.

Beispiel 4 (Vergleichsversuch)

Beispiel 3 wird mt 300 g Dicyanatobisphenol A und 100 g hydroxyterminierten Polysulfon von Beispiel 1 wiederholt.

Beispiel 5 (Vergleichsversuch)

Dicyanatobisphenol A (320 g) und 4-Cyanatobiphenyl (80 g) werden auf 100 °C erwärmt. Die Mischung wird 10 min entgast und 0,25 g Kupfer Naphthenat und 0,75 g Nonylphenol werden zugegeben. Das Harz wird in eine 4 mm x 25 cm x 25 cm Metallform gegossen und ausgehärtet bei 2 h 120 °C, 2 h 180 °C und 4 h 210 °C.

Beispiel 6 (Vergleichsversuch)

Beispiel 5 wird mit 300 g Dicyanatobisphenol A und 100 g 4-Cyanatobiphenyl wiederholt.

Beispiel 7 (Vergleichsversuch)

Beispiel 6 wurde mit 400 g Dicyanatobisphenol A wiederholt.

Tabelle

| Beispiel | Glastemperatur $T_g$ (tan δ) | Elastizitätsmodul E-Mod [N/mm²] | Bruchenergie $G_{Ic}$ [J/m²] |
|---|---|---|---|
| 1 | 280 °C (209 °C*) | 4217 | 301 |
| 2 | 246 °C (206 °C*) | 4237 | 363 |
| 3 | 271 °C (208 °C*) | 4160 | 243 |
| 4 | 264 °C (205 °C*) | 4181 | 236 |
| 5 | 246 °C | 4168 | 153 |
| 6 | 243 °C | 4166 | 184 |
| 7 | 290 °C | 4092 | 148 |

* Schulter

Beispiel 8 (Prepregherstellung)

1200 g Dicyanatobisphenol A, 400 g 4-Cyanatobiphenol und 400 g des hydroxyterminierten Polysulfons nach Beispiel 1 werden bei 110 °C gerüht bis eine Viskosität von 2800 mPas (gemessen bei 100 °C) erreicht ist. Die Mischung wird auf 100 °C abgekühlt und eine Katalysatormischung aus 1,875 g Nonylphenol und 0,625 g Cobaltnaphthenat zugesetzt. Aus der Mischung werden auf einem Film-Coater Filme mit einem Flächengewicht von 70 g/m² hergestellt. Diese Filme werden zusammen mit unidirektionalen Kohlenstoffasern (IM-7 der Fa. Hercules) bei 120 ° 2 bar zu einem Prepreg mit einem Fasergehalt von 67

Gew.% verpreßt. 32 derartige Prepregs werden nach dem Boeing-Test zu einem Laminat verpreßt, dieses wird 2 h lang bei 180 °C, 5 bar gehärtet und 4 h bei 210 °C nachgehärtet. An den erhaltenen Probekörpern werden die CAI-Werte bestimmt.

Beispiel 9 (Vergleich)

Beispiel 8 wird mit 2000 g Dicyanatobisphenol A wiederholt, wobei aber bei 150 °C gerührt wurde bis die Viskosität von 2800 mPas (100 °) erreicht war.

| Ergebnisse | |
|---|---|
| Beispiel | CAI-Wert |
| 8 | 261 mPa |
| 9 | 185 mPa |

## Ansprüche

1. Wärmehärtbare Harzmischung, enthaltend
A) 100 Gew.teile eines polyfunktionellen, aromatischen Cyansäureesters,
B) 2 bis 100 Gew.teile eines monofunktionellen aromatischen Cyansäureesters,
C) 5 bis 100 Gew.teile eines thermoplastischen Polymeren mit einer Glastemperatur oberhalb von 100 °C.
D) ggf. 0 bis 50 Gew.teile eines Bismaleinimids,
E) ggf. 0 bis 50 Gew.teile eines Epoxidharzes.

2. Wärmehärtbare Harzmischung nach Anspruch 1, dadurch gekennzeichnet, daß der polyfunktionelle Cyansäureester A ein Dicyanantobisphenol ist.

3. Wärmehärtbare Harzmischung nach Anspruch 1, dadurch gekennzeichnet, daß der monofunktionelle Cyansäureester 4-Cyanatobiphenyl ist.

4. Wärmehärtbare Harzmischung nach Anspruch 1, dadurch gekennzeichnet, daß der Thermoplast C ein reaktive Gruppen enthaltendes Polyimid, Polyetherketon, Polysulfon oder Polyethersulfon mit einem mittleren Molekulargewicht $M_n$ von 2 000 bis 30 000 ist.

5. Wärmehärtbare Harzmischung nach Anspruch 1, dadurch gekennzeichnet, daß der Thermoplast C ein hydroxylterminierten Polysulfon oder Polyethersulfon mit einem mittleren Molekulargewicht $M_n$ von 5 000 bis 20 000 ist.

6. Wärmehärtbare Harzmischung nach Anspruch 1, dadurch gekennzeichnet, daß sie eine Viskosität von 2 000 bis 5 000 mPas (bei 100 °C) aufweist.

7. Hochleistungsverbundwerkstoffe, enthaltend eine wärmehärtbare Harzmischung nach Anspruch 1 und 40 bis 80 Gew.% Verstärkungsfasern.